# EUROPÄISCHE PATENTSCHRIFT

(11) **EP 3 094 859 B1**
(45) Veröffentlichungstag und Bekanntmachung des Hinweises auf die Patenterteilung: **21.02.2018**
(21) Anmeldenummer: 14824447.8
(22) Anmeldetag: 18.12.2014
(51) Int. Cl.: F03B 3/14, F03B 13/26

(54) **VORRICHTUNG ZUM UMKEHREN DER LAUFSCHAUFELN FÜR EIN LAUFRAD IN EINEM GEZEITEN-KRAFTWERK**
DEVICE FOR REVERSING THE BLADES FOR AN IMPELLER WHEEL IN A TIDAL POWER PLANT
DISPOSITIF POUR RETOURNER LES AUBES MOBILES D'UNE ROUE À AUBES DANS UNE CENTRALE MARÉMOTRICE

(30) Priorität: 15.01.2014 DE 102014200576
(43) Veröffentlichungstag der Anmeldung: 23.11.2016
(73) Patentinhaber: Voith Patent GmbH, 89522 Heidenheim (DE)
(72) Erfinder: MEYER, Roland, 89522 Heidenheim (DE); KONDO, Mauricio, 89518 Heidenheim (DE); GAIRING, Markus, 89703 Ulm (DE); NEIDHARDT, Thomas, Heidenheim 89520 (DE); SILVA, Daniel Rodrigo Barreto, 89518 Heidenheim (DE)
(86) Internationale Anmeldenummer: PCT/EP2014/078381
(87) Internationale Veröffentlichungsnummer: WO 2015/106921

(56) Entgegenhaltungen:
- WO-A2-2010/002264
- GB-A- 750 951
- GB-A- 846 622
- GB-A- 1 089 556
- US-A- 1 877 048

## Beschreibung

Die vorliegende Erfindung betrifft eine Vorrichtung zum Umkehren der Laufschaufeln für ein Laufrad in einem Gezeiten-Kraftwerk.

Da sich bei einem Gezeiten-Kraftwerk die Fließrichtung des Wassers im Rhythmus der Gezeiten ständig umkehrt, ist es vorteilhaft, wenn ein und dasselbe Laufrad für beide Fließrichtungen benutzt werden kann. Zur Erzielung eines möglichst hohen Wirkungsgrades ist es notwendig, dass das hydraulische Profil der Laufschaufeln bezüglich der Fließrichtung des Wassers relativ zur Laufschaufel optimiert wird. Das bedeutet, dass die Vorder- und Rückseite der Laufschaufeln ein unterschiedliches Profil aufweisen, und impliziert, dass nur dann für beide Fließrichtungen ein hoher Wirkungsgrad erreicht werden kann, wenn die Laufschaufeln um wenigstens 180° gedreht werden können, so dass im Betrieb immer ein und dieselbe Seite der Laufschaufeln entgegen der Fließrichtung des Wasser zeigt. Kehrt sich die Fließrichtung um, so werden auch die Laufschaufeln umgekehrt.

Vorrichtungen zum Umkehren der Laufschaufeln sind aus dem allgemeinen Stand der Technik bekannt. Diese werden bei Kaplan- bzw. Propellerlaufräder verwendet. Bei diesen Laufrädern können die Laufschaufeln mit Hilfe eines hydraulischen Servomotors, der über eine in der Laufradnabe befindliche Verstellmechanik an die Laufschaufeln angreift, verstellt werden. Die Laufschaufeln sind dabei drehbar um eine Achse gelagert, die im Wesentlichen senkrecht zur Drehachse des Laufrades weist. An jeder Laufschaufel befindet sich im Nabeninneren ein Hebel, an den die Verstellmechanik angreift. Sollen die Laufschaufeln umgekehrt, d.h. um einen Winkel verdreht werden, der größer als 180° ist, so muss der sogenannte Totpunkt überwunden werden. So zeigt beispielsweise die GB750951 ein Laufrad für ein Gezeitenkraftwerk, bei dem der Totpunkt der Hebel mit Hilfe von Hilfsmotoren überwunden wird. Die Hilfsmotoren bestehen dabei aus jeweils zwei Hydraulikzylindern die jeweils senkrecht zum entsprechenden Hebel angreifen und diesen so über den Totpunkt bewegen. In der GB846622 wird der Totpunkt mit Hilfe von Hilfsmotoren überwunden, die jeweils über einen Zahnradabschnitt an den Zapfen einer Laufschaufel angreifen. Bei beiden der in den genannten Schriften beschriebenen Lösungen wird für jede Laufschaufel ein eigener Hilfsmotor benötigt, da nur so jeder der Hebel, die jeweils an einer Laufschaufel angreifen, über den Totpunkt gebracht werden kann.

Die Nachteile des beschriebenen Standes der Technik bestehen darin, dass durch die der Anzahl der Laufschaufeln entsprechende Anzahl von benötigten Hilfsmotoren eine hohe Komplexität und damit hohe Kosten verursacht werden. Zudem ist eine solche Anordnung anfällig für Störungen.

Die Aufgabe der hier vorliegenden Erfindung besteht darin, eine Vorrichtung für das Umkehren von Laufschaufeln bereitzustellen, die sowohl einfach im Aufbau als auch zuverlässig und robust im Betrieb ist.

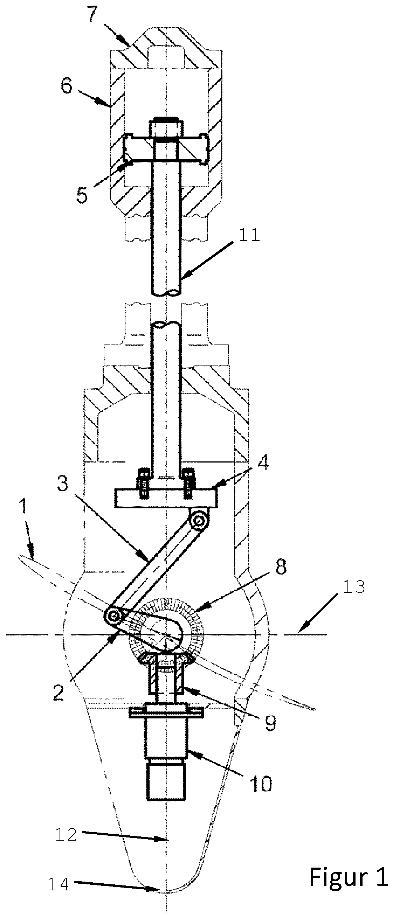

Die Erfinder haben erkannt, dass einer sauberen technischen Lösung hauptsächlich der begrenzte Raum entgegensteht, der hierfür zur Verfügung steht. Das Innere der Laufradnabe von herkömmlichen Kaplan- und Propellerlaufrädern ist mit der Verstellmechanik, die zur Bewegung der Laufschaufeln im Bereich kleiner als 180° dient, bereits sehr stark gefüllt, so dass kaum Platz für Hilfsmotoren und die zugehörige Mechanik vorhanden ist, die dazu benötigt werden, um den Totpunkt zu überwinden und so eine Bewegung der Laufschaufeln in einem Bereich, der größer als 180° ist, zu ermöglichen. So kann man z.B. in der zitierten GB846622 in Fig. 1 erkennen, dass fast der gesamte Nabeninnenraum zwischen den Lagern 4 der Laufschaufeln 2 und der Nabenspitze durch die Verstellmechanik ausgefüllt wird, die im Wesentlichen aus einem Stab 10, einem Kreuzkopf (cross-head) 8 und den an die Hebel 6 angreifenden Lenkern 7 besteht. Für die Hilfsmotoren bleibt nur der sehr begrenzte Raum zwischen den Lenkern 7 und der Nabenwand. Einen ganz analogen Aufbau zeigt auch die GB750951. Eine Vergrößerung der Laufradnabe, um mehr Raum zu gewinnen, verbietet sich, da dies zu einem kleineren Wirkungsgrad der Turbine führen würde.

Die Erfinder haben sich von dem Gedanken leiten lassen, im Nabeninnenraum, der sich zwischen den Lagerpunkten der Laufschaufeln und der Nabenspitze befindet, Platz für einen einzelnen Hilfsmotor zu schaffen, der alle Hebel der Laufschaufeln simultan über den Totpunkt bewegen kann.

Die Erfinder haben erkannt, dass die gestellte Aufgabe durch eine Vorrichtung zum Umkehren der Laufschaufeln mit den kennzeichnenden Merkmalen des Anspruchs 1 gelöst werden kann.

Die erfindungsgemäße Lösung wird nachfolgend anhand von einer Figur erläutert. Darin ist im Einzelnen folgendes dargestellt:
- Figur 1: eine erfindungsgemäße Vorrichtung zum Umkehren der Laufschaufeln für ein Kaplan- bzw. Propellerturbinenlaufrad

In der Darstellung der Figur 1 ist eine erfindungsgemäße Vorrichtung zum Umkehren der Laufschaufeln für ein Kaplan- bzw. Propellerturbinenlaufrad in schematischer Form gezeigt. Dabei ist eine der Laufschaufeln gezeigt und mit 1 bezeichnet. Mit 2 ist der zu dieser Laufschaufel 1 gehörige Hebel, mit 3 der zugehörige Lenker und mit 4 der Kreuzkopf bezeichnet. Die Kammer 6 mit Deckel 7 und Kolben 5 bilden einen hydraulischen Servomotor, der über die Stange 11 den Kreuzkopf 4 verschieben kann. Diese Bewegung wird über die Lenker 3 und die Hebel 2 auf die Laufschaufeln 1 übertragen, die auf diese Weise verdreht werden können. Weiterhin ist mit den Zapfen der Laufschaufeln 1 jeweils ein Zahnrad 8 drehfest verbunden. In alle diese Zahnräder 8 greift der Hilfsmotor 10 über ein entsprechendes Zahnrad 9 simultan ein, um so alle Hebel 2 über den Totpunkt zu bewegen. Die Drehachse des Laufrades ist mit 12 bezeichnet. Das Laufrad wird durch eine Ebene 13, die senkrecht auf der Drehachse 12 steht und durch die Drehachsen der Laufschaufeln aufgespannt wird, in zwei Teile geteilt. Der vordere Teil des Laufrades erstreckt sich von der Ebene 13 bis zur Spitze der Laufradnabe, welche mit 14 bezeichnet ist. Der hintere Teil des Laufrades befindet sich auf der anderen Seite der Ebene 13.

Es ist klar ersichtlich, dass sich die erfindungsgemäße Anordnung vom Stand der Technik dadurch unterscheidet, dass sich der Kreuzkopf 4 und damit der Großteil der Verstellmechanik im hinteren Teil des Laufrades befinden. Dadurch wird genügend Platz für einen einzelnen Hilfsmotor im vorderen Teil des Laufrades frei, der über geeignete Zahnräder simultan alle Hebel 2 der Laufschaufeln 1 über den Totpunkt bewegen kann. Diese Anordnung zeichnet sich durch eine hohe Robustheit und einen einfachen Aufbau aus.

Bei dem Hilfsmotor kann es sich um einen hydraulischen Hilfsmotor handeln. Es ist jedoch auch denkbar, einen geeigneten elektrischen Motor oder eine Kombination aus elektrisch betriebener Pumpe und hydraulischen Hilfsmotor (elektro-hydraulische Antriebseinheit) zu verwenden.

## Patentansprüche

1. Vorrichtung zum Umkehren der Laufschaufeln für ein Laufrad in einem Gezeiten-Kraftwerk, mit einem Servomotor (5, 6, 7) zum Verstellen der Laufschaufeln (1), welcher über eine Stange (11) an einen Kreuzkopf (4) angreift, an welchem Lenker (3) und Hebel (2) befestigt sind, welche an die Laufschaufeln (1) angreifen, mit einem Hilfsmotor (10) zum Überwinden des Totpunktes der Hebel (2), **dadurch gekennzeichnet, dass** der Hilfsmotor (10) über Zahnräder (8, 9) simultan an alle Hebel (2) der Laufschaufeln (1) angreift, und dass sich der Hilfsmotor (10) im vorderen Laufradteil befindet, und dass sich der Kreuzkopf (4) im hinteren Laufradteil befindet, wobei das Laufrad durch eine senkrecht zur Laufradachse verlaufende Ebene (13), die durch die Drehachsen der Laufschaufeln (1) aufgespannt wird, in einen hinteren und einen vorderen Teil aufgeteilt wird, wobei sich der vordere Laufradteil von der Ebene (13) bis zur Spitze des Laufrades (14) erstreckt und der hintere Laufradteil auf der der Spitze (14) abgewandten Seite der Ebene (13) liegt.

## Claims

1. Device for reversing the blades for an impeller in a tidal power plant, comprising a servomotor (5, 6, 7) for adjusting the blades (1), which acts via a rod (11) on a crosshead (4), to which there are fixed links (3) and levers (2) which act on the blades (1), comprising an auxiliary motor (10) for overcoming the dead point of the levers (2), **characterized in that** the auxiliary motor (10) acts simultaneously on all the levers (2) of the blades (1) via gear wheels (8, 9), and **in that** the auxiliary motor (10) is located in the front impeller part, and **in that** the crosshead (4) is located in the rear impeller part, wherein the impeller is divided into a rear and front part by a plane (13) that extends at right angles to the impeller axis and is spanned by the axes of rotation of the blades (1), wherein the front impeller part extends from the plane (13) as far as the tip of the impeller (14), and the rear impeller part is located on the side of the plane (13) facing away from the tip (14).

## Revendications

1. Dispositif pour retourner les aubes mobiles d'une roue mobile dans une centrale marémotrice, avec un servomoteur (5, 6, 7) pour le déplacement des aubes mobiles (1), qui agit par une tige (11) sur une crosse (4), à laquelle sont fixés des bielles (3) et des leviers (2), qui agissent sur les aubes mobiles (1), avec un moteur auxiliaire (10) destiné à franchir le point mort des leviers (2), **caractérisé en ce que** le moteur auxiliaire (10) agit par des roues dentées (8, 9) simultanément sur tous les leviers (2) des aubes mobiles (1), et **en ce que** le moteur auxiliaire (10) se trouve dans la partie avant de la roue mobile, et **en ce que** la crosse (4) se trouve dans la partie arrière de la roue mobile, dans lequel la roue mobile est divisée en une partie avant et une partie arrière par un plan (13) s'étendant perpendiculairement à l'axe de la roue mobile, qui est formé par les axes de rotation des aubes mobiles (1), dans lequel la partie avant de la roue mobile s'étend depuis le plan (13) jusqu'à la pointe (14) de la roue mobile et la partie arrière de la roue mobile est située sur le côté du plan (13) situé à l'opposé de la pointe (14).
